# EUROPEAN PATENT APPLICATION

(11) **EP 4 748 538 A1**
(43) Date of publication of application: **27.05.2026**
(21) Application number: 25217454.5
(22) Date of filing: 20.11.2025
(51) Int. Cl.: B25J 9/16, B25J 11/00

(54) **APPARATO PER ELIMINARE BAVE DA UN PEZZO DA LAVORARE E RELATIVO METODO**

(30) Priority: 20.11.2024 IT 202400026151
(71) Applicant: Bragagni, Rudi, 47522 Cesena (FC) (IT)
(72) Inventor: Bragagni, Rudi, 47522 Cesena (FC) (IT)
(74) Representative: Studio Torta S.p.A.

(57) **Abstract**

Apparatus for removing burrs from a workpiece, comprising: a robot (11) comprising a base (12) and a terminal end (13), wherein the terminal end (13) is movable with respect to the base (12) along a trajectory programmable as a function of the workpiece (2); a compensation unit (21) carried by the terminal end (13) of the robot (11) and configured to exert a compensating thrust on the workpiece (2); and a tool (31) carried by the compensation unit (21) and configured to cooperate with the workpiece (2).

## Description

### Cross-reference to related patent applications

This application claims priority from Italian Patent Application No. 102024000026151 filed on November 20, 2024, the content of which is incorporated herein by reference.

### Technical field

The present invention relates to an apparatus for removing burrs from a workpiece and to a related method.

In particular, the present invention finds advantageous, but not exclusive, application in removing burrs from a gear, for example a metal or plastic gear. Such application will be referred to hereinafter by way of non-limiting example, without thereby losing generality.

### Background art

Apparatuses are known for removing burrs from a workpiece, in particular a gear, which operate only by gravity, i.e. they perform a "gravity deburring". Such apparatuses are also known as gravity deburring machines.

Typically, a gravity deburring machine comprises a fixed structure, a tool and an arm operatively interposed between the fixed structure and the tool. In particular, the arm comprises a first end connected to the fixed structure and a second end configured to carry the tool. To remove the burrs from the workpiece, for example a metal gear, such workpiece is made to rotate, for example about a vertical axis, and the tool is arranged vertically above the workpiece and allowed to drop by gravity so as to cooperate with a surface of the workpiece on which the burrs to be removed are present. Conveniently, the gravity deburring machine comprises return means, for example springs, operatively interposed between the rigid structure and the arm so that the tool cooperates with the workpiece intermittently, for example only with a respective portion of each tooth of the metal gear.

Gravity deburring machines have a plurality of problems.

In particular, the tool of a gravity deburring machine can move only along a substantially vertical trajectory.

Furthermore, the structure and operation of a gravity deburring machine do not allow it to work on an internal toothing of a gear.

Furthermore, before using the gravity deburring machine on a workpiece, it is typically necessary to subject the workpiece to a hardening heat treatment. However, if the workpiece is a metal gear made by a "power skiving" process, the gravity deburring machine can be used neither before the hardening heat treatment, due to the tendency of the burrs to curl, nor after the hardening heat treatment, due to the high hardness and quantity of the burrs.

Furthermore, the roughness obtainable by working with a gravity deburring machine is approximately 12,5 µm, which may be excessive for some applications.

A purpose of the present invention is to provide an apparatus for removing burrs from a workpiece, which allows the aforementioned problems to be overcome.

### Disclosure of the invention

The aforementioned purpose is achieved by an apparatus for removing burrs from a workpiece as claimed in claim 1.

The present invention further relates to a method for removing burrs from a workpiece as claimed in claim 11.

### Brief description of the drawings

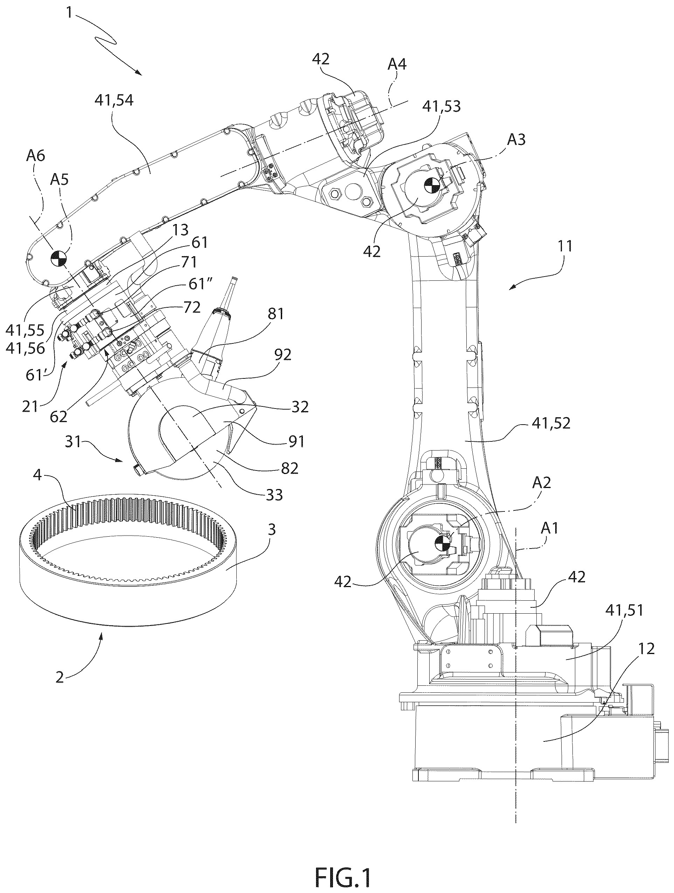

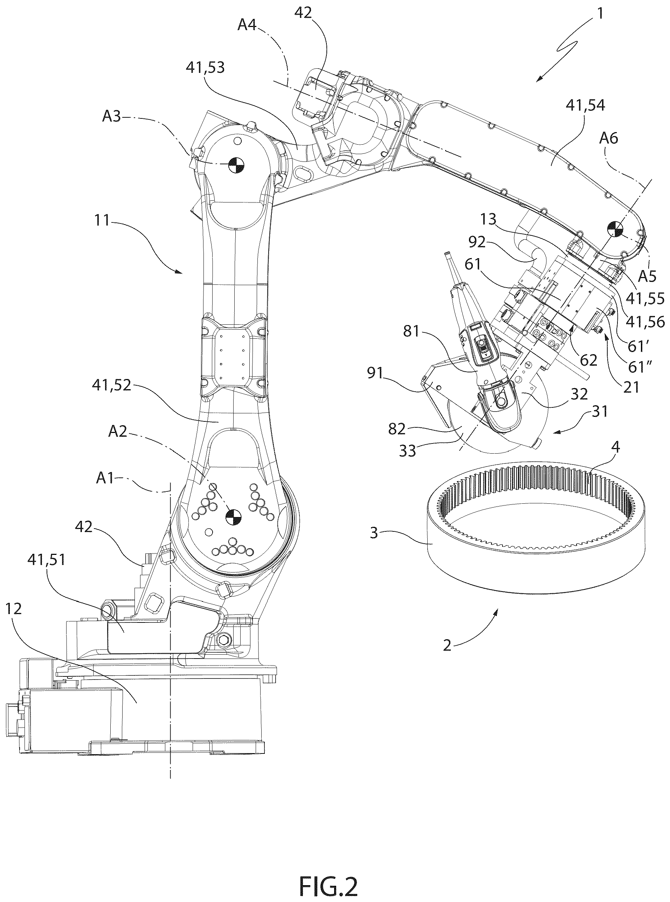

For a better understanding of the present invention, a preferred embodiment is described hereinafter, by way of non-limiting example and with reference to the accompanying drawings, wherein Figures 1 and 2 are respective views of an apparatus according to the present invention, with parts removed for the sake of clarity, and of a workpiece.

### Detailed description of the invention

With reference to Figure 1, there is indicated by 1 an apparatus for removing burrs from a workpiece 2 according to the present invention.

In particular, the workpiece 2 is a gear 3. Preferably, the gear 3 is made of metal or plastic material.

Conveniently, the gear 3 comprises an internal toothing 4, i.e. a plurality of teeth arranged on an internal lateral surface of the gear, and/or an external toothing, i.e. a plurality of teeth arranged on an external lateral surface of the gear.

For example, the gear 3 is a straight or helical cylindrical gear, or a bevel gear.

The apparatus 1 comprises a robot 11 comprising a base 12 and a terminal end 13.

In particular, the base 12 and the terminal end 13 define opposite ends of the robot 11. Conveniently, the base 12 is configured to be fixed to a fixed structure, for example a horizontal floor on which the robot 11 is arranged.

The terminal end 13 is movable with respect to the base 12 along a trajectory programmable as a function of the workpiece 2.

In particular, the trajectory depends on the geometry of the workpiece 2.

In the illustrated embodiment, the trajectory depends on the geometry of the internal toothing 4 of the gear 3.

The apparatus 1 further comprises a compensation unit 21 carried by the terminal end 13 of the robot 11 and configured to exert a compensating thrust on the workpiece 2, and a tool 31 carried by the compensation unit 21 and configured to cooperate with the workpiece 2.

In particular, the tool 31 is configured to contact the workpiece 2 and remove the burrs present on the workpiece 2. Conveniently, the compensation unit 21 is operatively interposed between the robot 11 and the tool 31 so as to exert the compensating thrust on the workpiece 2 via the tool 31.

In the illustrated embodiment, the tool 31 comprises a fixed part 32 and a movable part 33, which is movable with respect to the fixed part 32 and configured to cooperate with the workpiece 2, and the compensation unit 21 is operatively interposed between the terminal end 13 of the robot 11 and the fixed part 32 of the tool 31.

Preferably, the robot 11 has six degrees of freedom.

In particular, the six degrees of freedom are chosen such that the terminal end 13 of the robot 11, and thus the tool 31 carried by the robot 11 via the compensation unit 21, can assume any position and orientation within the working space of the robot 11.

In the illustrated embodiment, the robot 11 has six rotational degrees of freedom, i.e. each of the six degrees of freedom of the robot 11 is a rotational degree of freedom.

Preferably, the robot 11 comprises a plurality of arms 41 and actuator means 42 configured to actuate the arms 41, and an electronic unit configured to control a movement of each arm 41 by acting on the actuator means 42 such that the terminal end 13 of the robot moves along the aforementioned trajectory. The electronic unit is configured to calculate the movement of each arm 41 via inverse kinematics algorithms.

In particular, the inverse kinematics algorithms use sensor data acquired from sensor means configured to detect the positions of the respective arms 41.

In the illustrated embodiment, the robot comprises a first arm 51 rotatable with respect to the base 12 about a first axis A1, a second arm 52 rotatable with respect to the first arm 51 about a second axis A2, a third arm 53 rotatable with respect to the second arm 52 about a third axis A3, a fourth arm 54 rotatable with respect to the third arm 53 about a fourth axis A4, a fifth arm 55 rotatable with respect to the fourth arm 54 about a fifth axis A5, and a sixth arm 56 rotatable with respect to the fifth arm 55 about a sixth axis A6. Conveniently, the terminal end 13 of the robot 11 is the terminal portion of the sixth arm 56.

In particular, the second axis A2 and the third axis A3 are parallel to each other and orthogonal to the first axis A1 (which is for example vertical), thus defining an anthropomorphic manipulator. The fourth axis A4 (which is for example orthogonal to the first axis A1 and the second axis A2), the fifth axis A5 and the sixth axis A6 are mutually orthogonal, thus defining a spherical wrist. In other words, in the illustrated embodiment, the robot 11 is an anthropomorphic manipulator with a spherical wrist.

In the illustrated embodiment, the actuator means 42 comprise electric motors configured to cause the rotation of the arms 41 about the respective axes. In particular, each arm 41 is rotatable about the respective axis via a respective electric motor. Conveniently, the electronic unit is configured to calculate, via inverse kinematics algorithms, the rotation of each arm 41 about the respective axis such that the terminal end 13 of the robot moves along the aforementioned trajectory, and to control each electric motor so as to cause the respective rotation of the respective arm 41 about the respective axis.

Preferably, the compensation unit 21 comprises a first portion 61 coupled to the terminal end 13 of the robot 11 and a second portion 62 coupled to the tool 31, and the second portion 62 is movable with respect to the first portion 61 along a first direction.

In particular, the thrust exertable by the compensation unit 21 is a force extending along the first direction. Conveniently, the first direction is not fixed in space but is substantially fixed with respect to the terminal end 13 of the robot 11.

Conveniently, the first portion 61 is rigidly coupled, for example via screws, to the terminal end 13 of the robot 11 and the second portion 62 is rigidly coupled, for example via screws, to the fixed part 32 of the tool 31. Conveniently, the terminal end 13 of the robot 11, the compensation unit 21 (in particular the first portion 61 and the second portion 62 of the compensation unit 21) and the tool 31 (in particular the fixed part 32 of the tool 31) are arranged along the first direction.

In the illustrated embodiment, the compensation unit 21 is substantially shaped as a cylinder extending along the first direction, which is parallel to the sixth axis A6. In particular, the first portion 61 comprises a first plate 61' coupled to the terminal end 13 of the robot 11 and a first tubular sleeve 61'' extending from the first plate 61', and the second portion 62 comprises a second plate, parallel to the first plate 61' and coupled to the fixed part 32 of the tool 31, and a second tubular sleeve extending from the second plate. Conveniently, the second tubular sleeve faces the first plate, is arranged inside the first tubular sleeve 61" and is slidable with respect to the first tubular sleeve 61" so as to exert, via the second plate, a thrust along the first direction.

Preferably, the second portion 62 is movable with respect to the first portion 61 along a second direction orthogonal to the first direction.

In particular, the thrust exertable by the compensation unit 21 is a force extending along a plane defined by the first direction and the second direction. Conveniently, the second direction is not fixed in space but is substantially fixed with respect to the terminal end 13 of the robot 11.

Preferably, the second portion 62 is movable with respect to the first portion 61 along a third direction orthogonal to the first direction and the second direction.

In particular, the thrust exertable by the compensation unit 21 is a force extending in space. Conveniently, the third direction is not fixed in space but is substantially fixed with respect to the terminal end 13 of the robot 11.

Preferably, the compensation unit 21 comprises pneumatic means configured to exert the aforementioned compensating thrust.

In particular, the compensation unit 21 is pneumatically actuated, i.e. by applying a pressure, and the compensating thrust exerted by the compensation unit 21 depends on the applied pressure.

For example, the pneumatic actuation is effected via filtered and non-oiled compressed air.

In the illustrated embodiment, the pneumatic means comprise at least one piston operatively interposed between the first portion 61 and the second portion 62 of the compensation unit 21. For example, the piston is slidable along the first direction between two end-stops, for example it is arranged in a chamber present in the first tubular sleeve 61'' and extending along the first direction, and is rigidly coupled to the second tubular sleeve so as to cause the translation of the second portion 62 along the first direction.

Conveniently, such chamber is in fluid communication with a first pneumatic connection 71 and a second pneumatic connection 72 which are coupled to the first tubular sleeve 61" along the first direction, respectively closer to and further from the first plate 61'. In particular, via the first connection 71 (which is fluidically interposed between the aforementioned chamber and a first conduit) and the second connection 72 (which is fluidically interposed between the aforementioned chamber and a second conduit) compressed air is introduced into the aforementioned chamber to cause the sliding of the piston, and thus the translation of the second portion 62, respectively in opposite directions along the first direction. Conveniently, the compressed air introduced into the aforementioned chamber via the first connection 71 causes an increase in the distance between the first portion 61 (in particular the first plate 61') and the second portion 62 (in particular the second plate 62'), i.e. an extension movement of the second portion 62 with respect to the first portion 61, whereas the compressed air introduced into the aforementioned chamber via the second connection 72 causes a decrease in the distance between the first portion 61 (in particular the first plate 61') and the second portion 62 (in particular the second plate 62'), i.e. a retraction movement of the second portion 62 with respect to the first portion 61.

Preferably, the apparatus 1 comprises a control unit configured to control the aforementioned compensating thrust via closed loop control.

In particular, the control unit comprises the aforementioned electronic unit, or the control unit is distinct from such electronic unit and preferably in communication with such electronic unit.

Conveniently, the control unit is configured to determine a control variable which influences the compensating thrust, so that the actual compensating thrust is substantially equal to a reference compensating thrust.

For example, the reference compensating thrust is between 5 N and 250 N, preferably between 15 N and 85 N.

For example, the reference compensating thrust is constant, i.e. it is a constant predetermined value.

For example, the control variable is determined by the control unit via PID (Proportional, Integral, Derivative) control and comprises a proportional action, an integral action and a derivative action which depend on the error of the compensating thrust, defined as the difference between the reference compensating thrust and the actual compensating thrust.

Conveniently, the apparatus 1 comprises sensor means configured to generate and transmit to the control unit an output indicative of the actual compensating thrust. For example, such sensor means comprise a force sensor.

Preferably, the output indicative of the actual compensating thrust is also transmitted to the electronic unit, which uses such output to control the movements of the arms 41 by acting on the actuator means 42.

In the illustrated embodiment, the control unit is configured to determine the introduction of compressed air (for example via a proportional valve) into the compensation unit 21, which influences the compensating thrust, so that the actual compensating thrust is substantially equal to a reference compensating thrust. Conveniently, the reference compensating thrust depends on the material of which the workpiece 2 is made, for example it is greater if the gear 3 is made of metal material and is less if the gear 3 is made of plastic material.

Preferably, the control unit also implements a gravity compensation so that a predetermined compensating thrust is kept constant regardless of the orientation of the tool 31.

Preferably, the tool 31 comprises an abrasive rotary tool.

In particular, the movable part 33 of the tool 31 comprises the abrasive rotary tool which is rotatable about a respective axis, which is substantially fixed with respect to the fixed part 32 of the tool 31, and is configured to remove the burrs from the workpiece 2 by abrasion.

Conveniently, the apparatus 1 comprises an electric motor 81 configured to cause the rotation of the movable part 33 of the tool 31 about the respective axis.

Preferably, the abrasive rotary tool comprises an abrasive disc 82.

In particular, the abrasive disc 82 is rotatable about an axis substantially orthogonal to the sixth axis A6.

Conveniently, the fixed part 32 of the tool 31 comprises a casing 91 configured to partially enclose the abrasive disc 82 and to contain the residues of the workpiece 2 removed by the abrasive disc 82 and of the abrasive disc 82. Preferably, such residues are aspirated via a duct 92 fluidically connected to the casing 91.

For example, the abrasive disc 82 comprises an abrasive grain made of silicon carbide or aluminium oxide, a binder made of resin and a support made of nylon non-woven fabric.

According to the present invention, a method for removing burrs from a workpiece 2 is also provided.

The method comprises the steps of:
a) providing the workpiece 2 and the apparatus 1;
b) programming the trajectory of the terminal end 13 of the robot 11 as a function of the workpiece 2;
c) cooperating, by the tool 31, with the workpiece 2 by exerting, by the compensation unit 21, a compensating thrust on the workpiece 2.

Conveniently, in step a), the workpiece 2 has already undergone a main machining, for example it is the gear 3 wherein the internal toothing 4 has already been created, and has the burrs to be removed via the apparatus 1.

Conveniently, in step b), the trajectory depends on the geometry of the workpiece 2, for example the trajectory depends on the geometry of the internal toothing 4 of the gear 3. In particular, the trajectory of the terminal end 13 of the robot 11 is programmed such that the tool 31 cooperates with the workpiece 2, taking into account the geometry, position and orientation of the workpiece 2, of the compensation unit 21 and of the tool 31.

Conveniently, in step c), the workpiece 2 can be supported by a support structure configured to keep the workpiece 2 stationary, i.e. stationary with respect to the base 12 of the robot 11, or in motion, for example causing rotations and/or translations of the workpiece 2.

Preferably, the method comprises the step of selecting the compensating thrust as a function of the workpiece 2.

In particular, the compensating thrust, for example the force along the first direction, is selected as a function of the material of which the workpiece 2 is made, for example it is greater if the gear 3 is made of metal material and it is less if the gear 3 is made of plastic material.

Preferably, the method comprises the step of controlling in closed loop the compensating thrust.

In particular, the compensating thrust is controlled by acting (for example via PID control) on a control variable which influences the compensating thrust, so that the actual compensating thrust is substantially equal to a reference compensating thrust.

Preferably, the method comprises the step of selecting a rotational speed of the tool 31 as a function of the workpiece 2.

In particular, the rotational speed of the tool 31, for example of the abrasive disc 82, is selected as a function of the material of which the workpiece 2 is made, taking into account the characteristics of the tool 31, for example of the abrasive disc 82.

Preferably, the method comprises a step d), subsequent to step c), of subjecting the workpiece 2 to a hardening heat treatment.

In particular, the workpiece 2 from which the burrs have been removed can be subsequently subjected to a hardening heat treatment, which depends on the material of which the workpiece 2 is made, without the need for further positioning or finishing.

For example, if the workpiece 2 is made of 42CrMo4, it is possible to subject it in step d) to a gas nitriding treatment with a hardness of HV 650/800.

In view of the foregoing, the advantages of the present invention are evident.

In particular, the robot 11 allows the tool 31 to move along a programmable trajectory, rather than only along a substantially vertical trajectory, and the compensation unit 21 allows the tool 31 to apply to the workpiece 2 a force such as to effectively remove the burrs present on the workpiece 2.

Furthermore, the structure and operation of the apparatus 1 allow it to also work on an internal toothing 4 of a gear 3.

Furthermore, it is not necessary to subject the workpiece 2 to a hardening heat treatment before using the apparatus 1.

Furthermore, the apparatus 1 can also be easily used on a metal gear 3 made by a "power skiving" process.

Furthermore, the roughness obtainable by working with the apparatus 1 is approximately 0,8 µm, i.e. more than an order of magnitude lower than the roughness obtainable by working with a gravity deburring machine.

Finally, it is clear that modifications may be made to the apparatus 1 without departing from the scope of protection defined by the claims.

For example, the robot 11 could have a number of degrees of freedom other than six. For example, the robot 11 could have only two degrees of freedom, for example two translational degrees of freedom along two mutually orthogonal axes, or only three degrees of freedom, for example three translational degrees of freedom along three mutually orthogonal axes.

## Claims

1. Apparatus for removing burrs from a workpiece, comprising:
- a robot (11) comprising a base (12) and a terminal end (13), wherein the terminal end (13) is movable with respect to the base (12) along a trajectory programmable as a function of the workpiece (2);
- a compensation unit (21) carried by the terminal end (13) of the robot (11) and configured to exert a compensating thrust on the workpiece (2); and
- a tool (31) carried by the compensation unit (21) and configured to cooperate with the workpiece (2).

2. Apparatus as claimed in claim 1, wherein the robot (11) has six degrees of freedom.

3. Apparatus as claimed in claim 1 or 2, wherein the robot (11) comprises a plurality of arms (41) and actuator means (42) configured to actuate the arms (41), and an electronic unit configured to control a movement of each arm (41) by acting on the actuator means (42) such that the terminal end (13) of the robot (11) moves along said trajectory, wherein the electronic unit is configured to calculate the movement of each arm (41) via inverse kinematics algorithms.

4. Apparatus as claimed in any of the preceding claims, wherein the compensation unit (21) comprises a first portion (61) coupled to the terminal end (13) of the robot (11) and a second portion (62) coupled to the tool (31), wherein the second portion (62) is movable with respect to the first portion (61) along a first direction.

5. Apparatus as claimed in claim 4, wherein the second portion (62) is movable with respect to the first portion (61) along a second direction orthogonal to the first direction.

6. Apparatus as claimed in claim 5, wherein the second portion (62) is movable with respect to the first portion (61) along a third direction orthogonal to the first direction and the second direction.

7. Apparatus as claimed in any of the preceding claims, wherein the compensation unit (21) comprises pneumatic means configured to exert said compensating thrust.

8. Apparatus as claimed in any of the preceding claims, comprising a control unit configured to control said compensating thrust via closed loop control.

9. Apparatus as claimed in any of the preceding claims, wherein the tool (31) comprises an abrasive rotary tool.

10. Apparatus as claimed in claim 9, wherein the abrasive rotary tool comprises an abrasive disc (82).

11. Method for removing burrs from a workpiece, comprising the steps of:
a) providing the workpiece (2) and the apparatus (1) as claimed in any of the preceding claims;
b) programming the trajectory of the terminal end (13) of the robot (11) as a function of the workpiece (2); and
c) cooperating, by the tool (31), with the workpiece (2) by exerting, by the compensation unit (21), a compensating thrust on the workpiece (2).

12. Method as claimed in claim 11, comprising the step of selecting said compensating thrust as a function of the workpiece (2).

13. Method as claimed in claim 12, comprising the step of controlling in closed loop said compensating thrust.

14. Method as claimed in any of claims 11 to 13, comprising the step of selecting a rotational speed of the tool (31) as a function of the workpiece (2).

15. Method as claimed in any of claims 11 to 14, comprising a step d), subsequent to step c), of subjecting the workpiece (2) to a hardening heat treatment.
